# EUROPÄISCHE PATENTSCHRIFT

(11) **EP 1 322 489 B1**
(45) Veröffentlichungstag und Bekanntmachung des Hinweises auf die Patenterteilung: **28.06.2006**
(21) Anmeldenummer: 01971465.8
(22) Anmeldetag: 04.10.2001
(51) Int. Cl.: B60K 17/346

(54) **ACHSANTRIEBSBLOCK MIT DIFFERENTIALSPERRE**
FINAL DRIVE ASSEMBLY WITH DIFFERENTIAL LOCK
BLOC D'ENTRAINEMENT D'ESSIEUX A VERROUILLAGE DE DIFFERENTIEL

(30) Priorität: 04.10.2000 AT 7332000 U
(43) Veröffentlichungstag der Anmeldung: 02.07.2003
(73) Patentinhaber: Magna Steyr Fahrzeugtechnik AG & Co KG, 8041 Graz (AT)
(72) Erfinder: PECNIK, Hermann, A-8302 Nestelbach (AT)
(74) Vertreter: Kovac, Werner
(86) Internationale Anmeldenummer: PCT/AT2001/000317
(87) Internationale Veröffentlichungsnummer: WO 2002/028678

(56) Entgegenhaltungen:
- AT-B- 405 923
- US-A- 2 837 936

## Beschreibung

Die Erfindung handelt von einem Achsantriebsblock für Kraftfahrzeuge mit einer ersten und einer zweiten angetriebenen Achse, der in einem von einem Motor-Getriebe-Block aus angetriebenen Gehäuse ein erstes und ein zweites Differential enthält, wobei das erste Differential das zugeführte Drehmoment zwischen einer ersten Halbachse der ersten angetriebenen Achse und dem zweiten Differential verteilt und letzteres das ihm zugeführte Drehmoment weiter zwischen einer zweiten Halbachse der ersten angetriebenen Achse und einem Abtrieb für die zweite angetriebene Achse verteilt, wobei beide Differentiale parallelachsige Stirnradplanetengetriebe sind, deren Sonnenräder jeweils mit den Halbachsen der ersten angetriebenen Achse antriebsverbunden sind, und mit deren gemeinsamem Hohlrad Planetenräder beider Differentiale kämmen, wobei der eine Planetenträger mit dem Gehäuse drehfest verbunden ist und der andere Planetenträger mit dem Abtrieb für die zweite angetriebene Achse antriebsverbunden ist.

Ein derartiger Achsantriebsblock ist aus der AT 405 923 B bekannt. Bei diesem wird dank der besonderen Gestaltung und Anordnung der beiden Differentiale eine optimale Anpassung des Momentenverteilungsverhältnisses bei minimalem Bauaufwand erreicht. Zwischen dem die beiden Differentiale enthaltenden angetriebenen Gehäuse und dem Abtrieb für die zweite angetriebene Achse ist eine Flüssigkeitsreibungskupplung als Längsdifferentialsperre vorgesehen. Diese ist nicht nur aufwendig sperrig, sie hat auch den Nachteil, nur als Sperre des Differentiales zwischen den beiden Achsen zu wirken. Eine Sperrung des anderen Differentiales, des Differentiales zwischen den beiden Rädern der ersten angetriebenen Achse, ist nicht möglich.

Es ist somit Aufgabe der Erfindung, eine zumindest begrenzte Sperrung sowohl des Achsdifferentiales als auch des Längsdifferentiales mit minimalem Bauaufwand zu erreichen. Erfindungsgemäß wird das dadurch erreicht, dass
a) das Gehäuse eine bearbeitete Innenfläche hat, die das Hohlrad mit geringem Spiel umgibt,
b) das Hohlrad in radialer Richtung so dünn ist, dass es sich durch die Radialkomponente der von den Planetenrädern ausgeübten Zahnkräfte loboidartig verformt,
c) wodurch sich seine äussere Umfangsfläche zumindest örtlich reibend an die Innenfläche des Gehäuses anlegt, wodurch auf das Hohlrad ein Bremsmoment wirkt.

Auf diese Weise findet die Sperrung ohne zusätzliche Bauteile zwischen Gehäuse und Hohlrad statt. Mehr noch: Die Sperre wirkt sowohl auf das Achsdifferential der ersten angetriebenen Achse als auch auf das Zwischenachsdifferential zwischen den beiden angetriebenen Achsen. Auch das Sperrverhalten kommt den Anforderungen entgegen: Die Wirkung tritt erst bei hohen Drehmomenten auf, also wenn sie wirklich benötigt wird, nicht aber im Schleppbetrieb oder bei sanfter Kurvenfahrt. Weil die Zahnkräfte zwischen Planetenrädern und Hohlrad in beiden Differentialen ungefähr gleich sind, sind auch die Biegespannungen über die achsiale Länge des Hohlrades etwa gleich. Ausserdem übt das Gehäuse im Sperrzustand auf das Hohlrad eine stützende und die örtliche Expansion begrenzende Wirkung aus, was einer übermäßigen Verformung des Hohlrades und Zahnbrüchen vorbeugt. Alles das kommt der Lebensdauer des Hohlrades zugute.

In einer bevorzugten Ausführungsform ist das angetriebene Gehäuse in einer radialen Ebene geteilt, überragt der die Innenfläche bildende Teil des Gehäuses die radiale Teilungsebene und ist zwischen diesem Teil und der Radialfläche ein Freistich vorgesehen. (Anspruch 2). Dieser Freistich dient der Entkoppelung von durch die aussen an den Gehäuseteilen angreifenden Bolzen hervorgerufenen Verschraubungsspannungen und von durch Erwärmung der Innenfläche im Sperrbetrieb hervorgerufenen Wärmespannungen. Der die Innenfläche bildende Teil des Gehäuses bleibt dadurch maßhaltig. Ein weiterer Beitrag dazu besteht darin, dass der Gehäuseteil mit der Innenfläche an seiner Aussenseite über radiale Kühlrippen verfügt (Anspruch 3). Dadurch ist die Fläche für den Wärmeübergang an das Öl oder an die umgebende Getriebeatmosphäre, vergrößert.

Für die Gestaltung der Reibflächen - sowohl der Innenfläche des Gehäuses als auch der äusseren Umfangsfläche des Hohlrades - besteht große Gestaltungsfreiheit. Als vorteilhaft haben sich bearbeitete erhabene Zonen begrenzter achsialer Breite erwiesen (Anspruch 4). Die Verkleinerung der Kontaktfläche kann für eine bestimmte Bremswirkung zu einer Verkleinerung des erforderlichen Anpressdruckes führen und erleichtert das Einhalten der funktionsbedingt erwünschten engen Toleranzen.

Im folgenden wird die Erfindung anhand von Abbildungen eines Ausführungsbeispieles beschrieben und erläutert. Es stellen dar:
- Fig. 1:: Ein Schema des gesamten Achsantriebsblockes,
- Fig. 2:: Einen Achsialschnitt durch das Doppeldifferential,
- Fig. 3:: Einen Radialschnitt nach III-III in Fig. 2.

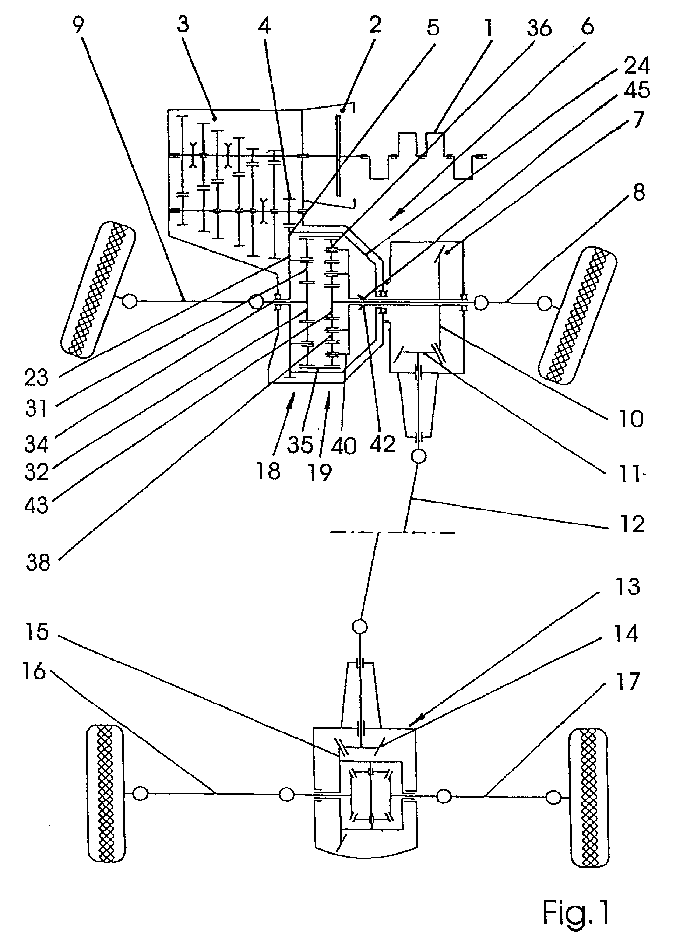

In dem in Figur 1 dargestellten allradgetriebenen Kraftfahrzeug ist der Motor mit 1, die Kupplung 2 und das Schaltgetriebe mit 3 bezeichnet. Das Getriebe 3 endet in einem Abtriebzahnrad 4, das mit einem großen Antriebszahnrad 5 kämmt. Das Antriebszahnrad 5 ist bereits Teil des Achsantriebsblockes 6. An diesen schließt ein Abtrieb 7 für den Hinterachsantrieb und eine rechte und eine linke Halbachse 8,9 für den Antrieb der Vorderräder an. Im Inneren des Abtriebes 7 befindet sich ein Paar Kegelräder 10,11 und das Drehmoment für die Hinterachse wird über eine Gelenkwelle 12 einem beispielsweise konventionellen Differentialgetriebe 13 zugeführt, in dem über ein Paar Kegelräder 14,15 in bekannter Weise die Halbachsen 16,17 der Hinterräder angetrieben werden. Im Inneren des Achsantriebsblockes 6 befindet sich ein erstes und ein zweites Planetengetriebe 18,19, die im folgenden näher beschrieben werden.

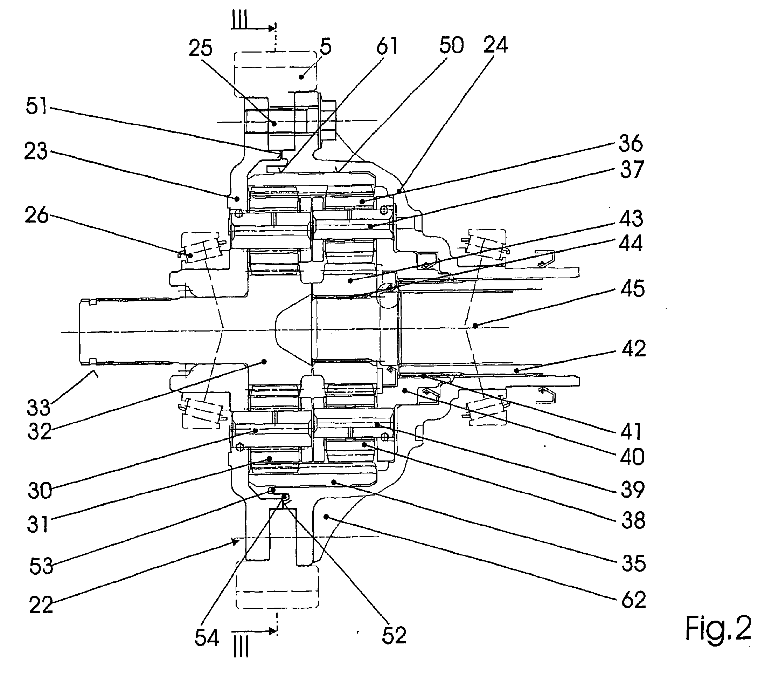

Der in Fig. 2 dargestellte drehende Inhalt des Achsantriebsblockes ist, ausgehend vom Antriebszahnrad 5, ein angetriebenes Gehäuse 22, das die beiden Planetengetriebe 18,19 enthält. Das Gehäuse 22 besteht aus zwei Gehäuseteilen 23, 24, die hier gemeinsam mit dem Antriebszahnrad 5 mittels Gewindebolzen 25 zusammengespannt sind. Die achsiale Lage der Teilfuge zwischen den beiden Gehäuseteilen kann entsprechend äusseren Erfordernissen festgelegt sein, es können entweder beide gleich tief sein oder einer der Gehäuseteile ist ein flacher Deckel und der andere eine tiefe Glocke.

Der erste Gehäuseteil 23 ist gleichzeitig Planetenträger des ersten Differentialgetriebes 18 und mittels der Gewindebolzen 25 mit dem glockenförmigen Gehäuseteil 24 fest verbunden. Beide zusammen bilden somit einen starren Teil, der mittels Lagern 26,27 im Gehäuse 20,21 drehbar gelagert ist. Zu diesem ersten Planetengetriebe 18 gehören weiters um Achsen 30 drehbare Planetenräder 31 und ein Sonnenrad 32, das mittels einer Keilverzahnung 33 mit der linken Ausgangswelle 34 verbunden ist, an die die Halbachse 9 (Fig. 1) anschließt.

Ein Hohlrad 35 umgibt die Planetenräder 31 des ersten Planetengetriebes 18 und ist gleichzeitig auch das Hohlrad des zweiten Planetengetriebes 19. Es kämmt mit den äußeren Planetenrädern 36 des zweiten Planetengetriebes 19, die auf Achsen 37 gelagert sind, welche ihrerseits im zweiten Planetenträger 40 befestigt sind. Die ersten Planetenräder 36 kämmen außerdem mit zweiten Planetenrädern 38, die auf Achsen 39 ebenfalls am Planetenträger 40 gelagert sind.

Dieser zweite Planetenträger 40 ist über eine Keilverzahnung 41 mit einer Hohlelle 42 verbunden, welche in den Abtrieb 7 für die Hinterachse (Fig. 1) führt. Die inneren Planetenräder 38 kämmen mit einem Sonnenrad 43, welches über eine Keilverzahnung 44 mit der rechten Ausgangswelle 45 verbunden ist. Diese führt über die rechte Achsantriebswelle 8 (Fig. 1) zum rechten Vorderrad.

Der Kraftfluß verläuft folgendermaßen: das vom großen Antriebszahnrad 5 aufgenommene Drehmoment wird zuerst im ersten Planetengetriebe 18 zwischen dem Sonnenrad 32 und somit der linken vorderen Achsantriebswelle 9 einerseits und andererseits dem Hohlrad 35 aufgeteilt. Dieses stellt die Verbindung zwischen erstem und zweitem Planetengetriebe dar. Das dem zweiten Planetengetriebe 19 so zugeführte Drehmoment wird über die Planetenräder 36,38 verteilt, auf einerseits deren Planetenträger 40 und damit den Abtrieb 7 für die Hinterräder, und andererseits auf das Sonnenrad 43 und damit die rechte Halbachse 8 des Vorderradantriebes.

Erfindungsgemäß ist nun der Gehäuseteil 24 und das Hohlrad 35 in besonderer Weise gestaltet. Der Gehäuseteil 24 hat eine bearbeitete zylindrische Innenfläche 50, welche sich über den grössten Teil der achsialen Breite des Hohlrades 35 erstreckt. Weiters hat er eine Radialfläche 51, die ungefähr in der radialen Teilungsebene liegt. Weiter aussen sind in Flanschen Gewindebolzen 25 zur Verbindung der beiden Gehäuseteile vorgesehen. Am anderen Gehäuseteil 23 ist eine weitere Radialfläche 52 vorgesehen. Die Innen-fläche 50 reicht in einen die Radialflächen 51,52 überragenden Kragen 53. Zwischen diesem und der Radialfläche 51 ist ein Freistich 54 vorgesehen, der dazu dient, Wärmespannungen von der Passfläche 51 und Zugspannungen von der Innenfläche 50 fernzuhalten.

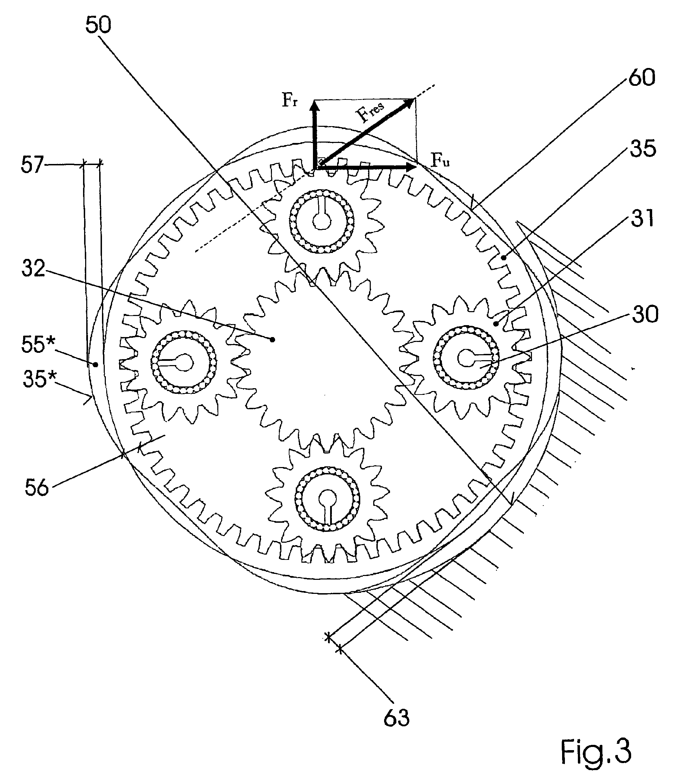

Fig. 3 zeigt das Hohlrad 35 im Radialschnitt. Es ist so bemessen, dass es sich unter der Radialkomponente F_{R} der von den (hier vier) Planetenrädern 31 ausgeübten Zahnkräfte F zu einem Loboid 35* mit (hier vier) Ausbauchungen 55* verformt, was strichliert und stark übertrieben dargestellt ist. Dazu ist die radiale Dicke 56 des Hohlrades so klein gewählt, dass sich die Umfangsfläche 60 des Hohlrades 35 an den Stellen des Eingriffes der Planetenräder 31 theoretisch um einen Betrag 57 auswärts verformt; die dazwischenliegenden Zonen des Hohlrades 35 verlagern sich naturgemäß einwärts. Dazu kommt es aber im Betrieb nicht, weil sich die auswärts verlagerten Teile der Umfangsfläche 60 vorher an die Innenfläche 50 des angetriebenen Gehäuses anlegen. Der so herbeigeführte Reibschluss bewirkt eine zumindest teilweise Sperre beider Differentiale. Der Vollständigheit halber ist dem hinzuzufügen, dass die Planetenräder 36 des zweiten Planetengetriebes 19 auf das Hohlrad 35 dieselbe Wirkung ausüben.

Der Reibschluss kann durch Gestaltung der Umfangsfläche 60 und der Innenfläche 50 optimiert werden. Dazu können geeignete Oberflächenbehandlungsverfahren eingesetzt werden. Im gezeigten Ausführungsbeispiel, wieder Fig. 2, wird das durch zwei erhabene Zonen 61 begrenzter achsialer Breite an der Umfangsfläche 50 des Hohlrades erreicht. Zur Verbesserung der Wärmeleitung sind an dem Gehäuseteil 24 ferner noch radiale Kühlrippen 62 vorgesehen, die das Gehäuse auch versteifen.

## Patentansprüche

1. Achsantriebsblock für Kraftfahrzeug mit einer ersten und einer zweiten angetriebenen Achse, der in einem von einem Motor-Getriebe-Block (1) aus angetriebenen Gehäuse ein erstes und ein zweites Differential (18,19) enthält, wobei das erste Differential (18) das zugeführte Drehmoment zwischen einer ersten Halbachse (9) der ersten angetriebenen Achse (8,9) und dem zweiten Differential (19) verteilt und letzteres das ihm zugeführte Drehmoment weiter zwischen einer zweiten Halbachse (8) der ersten angetriebenen Ache (8,9) und einem Abtrieb (7) für die zweite angetriebene Achse (16,17) verteilt, wobei beide Differentiale (18,19) parallelachsige Stirnradplanetengetriebe sind, deren Sonnenräder (32,43) jeweils mit den Halbachsen (8,9) der ersten angetriebenen Achse antriebsverbunden sind, und mit deren gemeinsamem Hohlrad (35) Planetenräder (36,38) beider Differentiale (18,19) kämmen, wobei der eine Planetenträger (23) mit dem Gehäuse drehfest verbunden ist und der andere Planetenträger (40) mit dem Abtrieb (7) für die zweite angetriebene Achse antriebsverbunden ist, **dadurch gekennzeichnet, dass**
a) das Gehäuse (22) eine bearbeitete Innenfläche (50) hat, die das Hohlrad (35) mit geringem Spiel (63) umgibt,
b) das Hohlrad (35) in radialer Richtung so dünn ist, dass es sich durch die Radialkomponente (F_{R}) der von den Planetenrädern (31,36) ausgeübten Zahnkräfte loboidartig (35*) verformt,
c) wodurch sich seine äussere Umfangsfläche (60) zumindest örtlich reibend an die Innenfläche (50) des Gehäuses (22) anlegt, und so auf das Hohlrad (35) ein Bremsmoment wirkt.

2. Achsantriebsblock nach Anspruch 1 mit in einer radialen Ebene in zwei Gehäuseteile (23,24) geteiltem angetriebenem Gehäuse (22), **dadurch gekennzeichnet, dass** der mit der Innenfläche (50) bildende Teil des Gehäuses (24) die radiale Teilungsebene überragt und zwischen diesem Teil und der Radialfläche (51) einen Freistich (54) aufweist.

3. Achsantriebsblock nach Anspruch 2, **dadurch gekennzeichnet, dass** der Gehäuseteil (24) mit der Innenfläche (50) an seiner Aussenseite über radiale Kühlrippen (62) verfügt.

4. Achsantriebsblock nach Anspruch 1, **dadurch gekennzeichnet, dass** die Umfangsfläche (60) des Hohlrades (35) bearbeitete erhaben Zonen (61) begrenzter achsialer Breite aufweist.

## Claims

1. An axle-drive block for a motor vehicle having a first and a second driven axle which contains a first and a second differential (18, 19) in a housing driven by an engine/transmission block (1), the first differential (18) dividing the torque fed to it between a first half axle (9) of the first driven axle (8, 9) and the second differential (19), and the latter furthermore dividing the torque fed to it between a second half axle (8) of the first driven axle (8, 9) and a power take-off (7) for the second driven axle (16, 17), the two differentials (18, 19) being spur-gear-type planetary gears with parallel axes, the sun wheels (32, 43) of which are in each case connected in terms of drive to the half axles (8, 9) of the first driven axle, and planet wheels (36, 38) of the two differentials (18, 19) meshing with their common ring gear (35), the one planet carrier (23) being connected in a rotationally fixed manner to the housing and the other planet carrier (40) being connected in terms of drive to the power take-off (7) for the second driven axle, **characterized in that**
a) the housing (22) has a machined inner surface (50) which surrounds the ring gear (35) with little clearance (63),
b) the ring gear (35) is so thin in the radial direction that it is deformed in a lobe-like manner (35*) by the radial component (F_{R}) of the tooth forces exerted by the planet wheels (31, 36),
c) its outer circumferential surface (60) thereby being placed against the inner surface (50) of the housing (22) in a manner producing friction at least locally, and a braking moment thereby acting on the ring gear (35).

2. The axle-drive block as claimed in claim 1 having a driven housing (22) which is divided in a radial plane into two housing parts (23, 24), **characterized in that that** part of the housing (24) which forms the inner surface (50) rises above the radial plane of separation and has an undercut (54) between this part and the radial surface (51).

3. The axle-drive block as claimed in claim 2, **characterized in that** the housing part (24) with the inner surface (50) has radial cooling ribs (62) on its outside.

4. The axle-drive block as claimed in claim 1, **characterized in that** the circumferential surface (60) of the ring gear (35) has machined, raised zones (61) of limited axial width.

## Revendications

1. Bloc d'entraînement d'essieux pour véhicule comportant des premier et deuxième essieux entraînés, ledit bloc contenant des premier et deuxième différentiels (18, 19) dans un boîtier qui est entraîné depuis un bloc de transmission moteur (1), le premier différentiel (18) distribuant le couple de rotation appliqué entre un premier semi-arbre (9) du premier essieu entraîné (8, 9) et le deuxième différentiel (19), et le deuxième différentiel (19) distribuant le couple de rotation appliqué par lui entre un deuxième semi-arbre (8) du premier essieu entraîné (8, 9) et une sortie d'entraînement (7) destinée au deuxième essieu entraîné (16, 17), les deux différentiels (18, 19) étant des engrenages planétaires cylindriques dont les roues solaires (32, 43) sont reliées en entraînement respectivement à un semi-arbre (8, 9) du premier essieu entraîné, et dont la couronne de train planétaire qui est commune (35) s'engrène avec des roues planétaires (36, 38) des deux différentiels (18, 19), une première cage de transmission planétaire (23) étant reliée fixe en rotation au boîtier et l'autre cage de transmission planétaire (40) étant reliée en entraînement à la sortie d'entraînement (7) destinée au deuxième essieu entraîné,
**caractérisé en ce que** :
a) le boîtier (22) présente une surface intérieure usinée (50) qui entoure la couronne de train planétaire (35) avec un faible jeu (63),
b) la couronne de train planétaire (35) a une minceur telle dans une direction radiale qu'elle subit une déformation lobaire (35*) sous l'action des composantes radiales (F_{R}) des forces exercées par les dents des roues planétaires (31, 36),
c) de sorte que la surface périphérique extérieure (60) de ladite couronne s'applique localement avec friction contre la surface intérieure (50) du boîtier (22), et exerce ainsi un couple de freinage sur la couronne de train planétaire (35).

2. Bloc d'entraînement d'essieux selon la revendication 1, comportant un boîtier entraîné (22) divisé dans un plan radial en deux parties de boîtier (23, 24), **caractérisé en ce que** la partie de boîtier (24) qui présente la surface intérieure (50) fait saillie au-dessus du plan de division radiale, et comporte entre cette partie et la surface radiale (51) une rainure de dégagement (54).

3. Bloc d'entraînement d'essieux selon la revendication 2, **caractérisé en ce que** la partie de boîtier (24) qui présente la surface intérieure (50) dispose sur son côté extérieur de nervures de refroidissement radiales (62).

4. Bloc d'entraînement d'essieux selon la revendication 1, **caractérisé en ce que** la surface périphérique (60) de la couronne de train planétaire (35) comporte des zones saillantes usinées (61) de largeur axiale limitée.
